Europäisches Patentamt

**European Patent Office**

**Office européen des brevets**

(11) Publication number: **0 088 982**
**B1**

(12) **EUROPEAN PATENT SPECIFICATION**

(45) Date of publication of patent specification: **01.04.87**

(21) Application number: **83102229.8**

(22) Date of filing: **07.03.83**

(51) Int. Cl.⁴: **G 06 F 3/06, G 06 F 13/00**

(54) Microcomputer system with buffer in peripheral storage control.

(30) Priority: **10.03.82 JP 36408/82**

(43) Date of publication of application:
**21.09.83 Bulletin 83/38**

(45) Publication of the grant of the patent:
**01.04.87 Bulletin 87/14**

(84) Designated Contracting States:
**DE FR GB**

(56) References cited:
**EP-A-0 013 853**
**WO-A-80/02755**
**US-A-3 999 163**
**US-A-4 215 400**
**US-A-4 303 988**

**ELECTRONIC DESIGN, vol. 29, no. 13, June
1981, pages 145-150, Waseca, MN., USA DOUG
VAN DORSTEN et al.: "Controller chip
simplifies interfaces to floppy-disk drives"**

(73) Proprietor: **Hitachi, Ltd.**
**5-1, Marunouchi 1-chome**
**Chiyoda-ku Tokyo 100 (JP)**

(72) Inventor: **Funabashi, Tsuneo**
**2-32-D308, Koyasu-cho**
**Hachioji-shi Tokyo (JP)**
Inventor: **Iwasaki, Kazuhiko**
**3-1-3, Higashi-Koigakubo**
**Kokubunji-shi Tokyo (JP)**
Inventor: **Nakamura, Hideo**
**2196-287, Hirai Hinode-machi**
**Nishitama-gun Tokyo (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

## Description

## BACKGROUND OF THE INVENTION
### Field of the Invention
The present invention relates to a microcomputer system as specified in the preamble of Claim 1.

### Description of the Prior Art
In order to read out data from a floppy disc and to store them in a random access memory (RAM) used by a microcomputer (MPU), according to the prior art, a buffer is provided in the control of the floppy disc drive so that data having been read out from that disc are transferred to the RAM after they have been stored in that buffer. The MPU is made operative to execute the data processing using those data or to rewrite a portion of those data and to store them again in the floppy disc through the buffer.

US—A—4303988 discloses a random accessible filing system equipped with magnetic discs and adapted to select, through random access, the signals recorded with the address on the magnetic discs. The system comprises a central processing unit (CPU), a read only memory, a random access memory and a magnetic disc unit. The section of this system for handling the read and write signals comprises two RAM-buffer memories, address counters for indicating the address of the buffer memories and a data switching circuit for switching the flow of data. The address counter is preset directly by the CPU and thus, an address control program is required for the CPU. Further, the system is not adapted to DMA-transfer.

In the prior art, the read operation of the data from the disc has been conducted for each region which is called "sector". Therefore, the buffer has a capacity corresponding to one sector or to an integral number of sectors.

In the prior art, moreover, even when the CPU makes use of a portion of data in one sector of the floppy disc, the contents of the sector as a whole are read out to the buffer and are then wholly transferred to the RAM. Since the data left unused are also transferred, the data bus is occupied by the unnecessary data transfer.

Even when the CPU rewrites predetermined data of one sector, moreover, all the data of the sector are transferred from the buffer, and the CPU then accesses the RAM to rewrite the data. After that, the data of the whole sector, including the corrected data, are stored again in the disc through the buffer. This results in a useless process in which the data requiring no rewriting are also transferred to the RAM.

From the fact thus far described, it is desired that the system be constructed such that only the desired ones of the data in the buffer disposed in a peripheral storage control are transferred to the RAM. In case the data in the buffer are to be rewritten, moreover, it is desired that the buffer be accessed directly by the MPU so that the data may be rewritten. In order to construct the peripheral storage control of an integrated circuit in this instance, it is desired for not increasing the number of pins necessary for the external storage control that the foregoing desires can be realized by using the signal lines, which are used in the conventional microcomputer, as they are as much as possible.

## SUMMARY OF THE INVENTION
It is, therefore, an object of the present invention to provide a microcomputer system which is capable to selectively transfer desired data in a buffer disposed in a peripheral storage control to a RAM, in particular when the signal lines employed in the conventional microcomputer system are used as much as possible.

Another object of the present invention is to provide a microcomputer system which can selectively transfer the data in the aforementioned buffer.

According to the present invention, this object is achieved by a microcomputer system as defined by claim 1.

In order that the data in the buffer may not be transferred to the RAM but be rewritten, the peripheral storage control is further equipped with both a circuit for setting a rewrite address further given from the MPU in the counter, which is operative to give the address of the buffer, in association with a rewrite command fed from the MPU, and a circuit for giving the rewrite signal to the buffer each time the rewrite data are given after the setting operation from the MPU.

## BRIEF DESCRIPTION OF THE DRAWINGS
Fig. 1 is a block diagram showing the overall construction of a microcomputer system according to the present invention; and

Fig. 2 is a circuit diagram showing the detailed construction of an essential portion of an I/O processing unit and a data processing unit shown in Fig. 1.

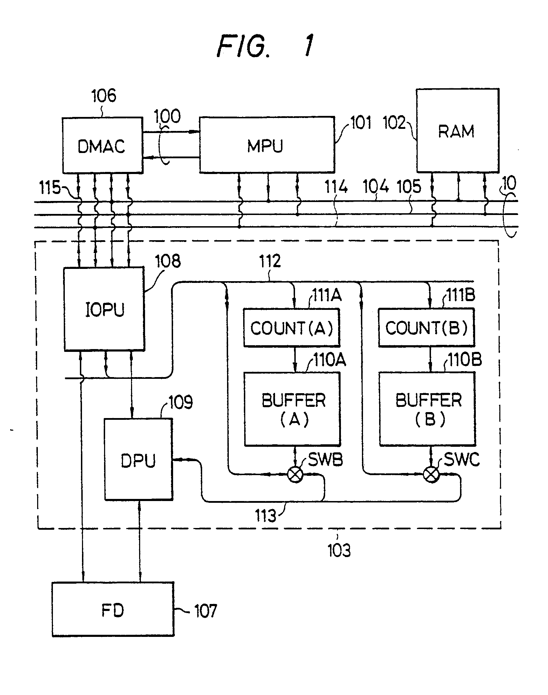

## DESCRIPTION OF THE PREFERRED EMBODIMENT
In Fig. 1, a microcomputer (MPU) 101 is connected with a random access memory (RAM) 102, a direct memory access (DMA) control 106 and a control 103 for a floppy disc (FD) 107 including a disc drive (not shown) through a common bus 10 which is composed of an address bus 104, a data bus 105 and a control bus 114. The FD control 103 controls the access to the floppy disc 107 in response to a signal coming from the MPU or the DMA control 106. Moreover, the FD control 103 is constructed of: an I/O processing unit (IOPU) 108 for controlling the operation of the FD control 103 in response to commands from the MPU; a data processing unit (DPU) 109 for conducting the error check of the data coming from the floppy disc 107 and so on; buffers (A) and (B) 110A and 110B for storing the data from the floppy disc 107; and counters (A) and (B) 111A and 111B for giving addresses to those buffers. The buffers (A) and (B) respectively have a capacity corresponding to one sector of the floppy disc 107.

The DMA control 106 is connected with the common bus 10 and with the MPU 101 and the IOPU 108 through signal lines 100 and 115, respectively, and is constructed of the well-known DMA control. More specifically, the DMA control 106 controls, in place of the MPU 101, the data transfer between the FD control 103 and the RAM 102.

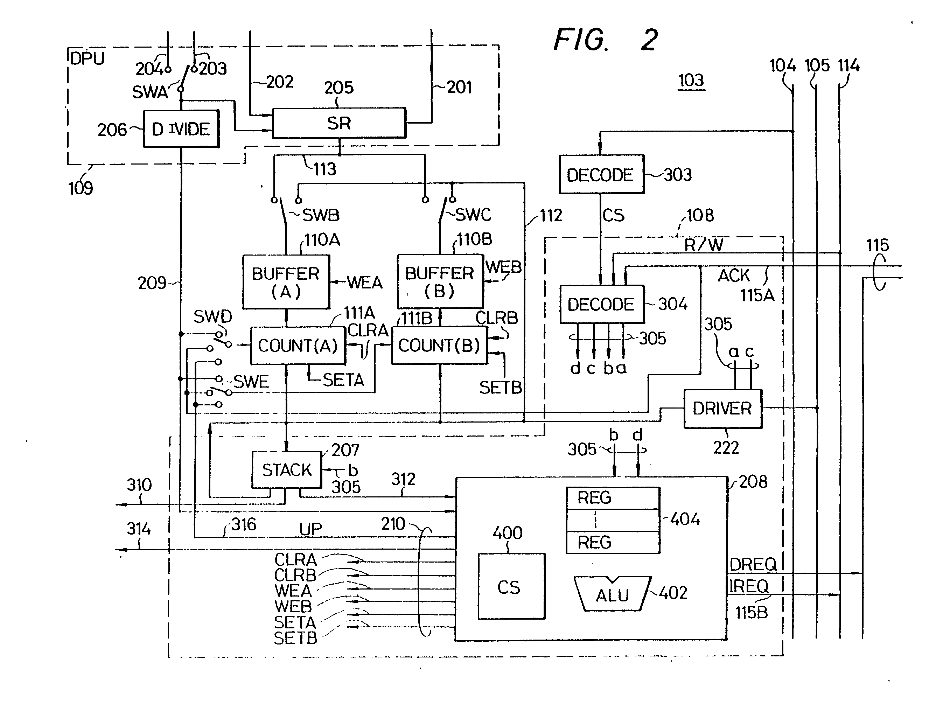

Fig. 2 shows such a portion of the IOPU 108 and the DPU 109 as is associated with the present invention.

A peripheral decoder 303 decodes whether the address on the bus 104 has been assigned to the IOPU or not, and generates a chip select signal CS if the result is affirmative.

The IOPU 108 is connected with the peripheral decoder 303, the data bus 105, the control bus 114 and the signal line 115 and is constructed of a single integrated circuit.

An internal decoder 304 controls both the data transfer direction at a bus driver 222, and the setting of data to a register stack 207, in response to the chip select signal CS, a read/write signal R/W given from the bus 114 and a DMA transfer acknowledge signal ACK given from the DMA control 106 through the line 115.

Either when both the signals CS and R/W take a value of 1 or when the signal ACK takes the value 1 whereas the signal R/W takes a value of 0, more specifically, the internal decoder 304 controls the bus driver 222 into a send state. Either when the signal CS takes the value 1 whereas the signal R/W takes the value 0 or when both the signals ACK and R/W take the value 1, on the other hand, the internal decoder 304 controls the bus driver 222 into a receive state.

The register stack 207 is made operative to store either a command, which is given from the MPU 101 through the bus 105 and the driver 222, or data for executing that command and has such a stack pointer (although not shown) as is made operative to indicate the number of a register to store the command or data.

A microinstruction control (which will be shortly referred to as a "µ control") 208 is made operative to control the counters (A) and (B), the buffers (A) and (B) and so on by making use of a microinstruction in response to that command. The microinstruction control 208 is equipped with a microinstruction storage 400, an arithmetic and logical operation unit 402, a group of internal registers 404 and so on and is realized by a microcomputer of the well-known microprogram control.

The DPU 109 includes a shift register 205 of 8 bits, which is made receptive of such data serially through a line 202 as has been read out from the floppy disc 107. The data of that shift register 205 are fed in parallel through a disc bus 113 to the buffer (A) or (B). Moreover, the data of the buffer (A) or (B) are transferred in parallel through the disc bus 113 to the shift register 205 from the buffer (A) or (B), when they are to be stored in the floppy disc 107, and they are transferred serially through a line 201 to the floppy disc 107. Switches SWB and SWC are provided to respectively connect the buffer (A) or (B) with the disc bus 113 or the internal bus 112. Incidentally, a divider 206 is a circuit for dividing either the frequency of a read clock 203 or that of a write clock 204, which is given from the floppy disc 107, into one eighth. The output of that divider 206 is used to increment the counter (A) or (B). Switches SWD and SWE are provided to respectively select the clocks to be supplied to counters (A) and (B).

The operations of the microcomputer system will be described in detail in the following.

Read Mode of Data from Disc to Buffer

The MPU 101 sequentially writes both a first command for instructing the FD control 103 to read out the data from the disc and the data necessary for executing that command in the FD control 103. The data necessary for the execution of the first command include a sector identification number ID for designating a sector to start the reading operation from the floppy disc 107, a buffer number BN indicating which of the buffers (A) or (B) is the buffer for starting to store the data read out, and the number of sectors SN to conduct the reading operation from the floppy disc. Incidentally, the sector number SN is two or less. The MPU executes the store instruction having both the address, which has been assigned to the FD control 103, and the data indicating the first command. As a result of the execution of that store instruction, the MPU feeds the bus 104 with the address of the FD control 103 and the bus 105 with the first command and makes the signal R/W on the bus 114 take the value 0. The decoder 303 decodes that address to generate the chip select signal CS. In response to this chip select signal CS and the signal R/W having the value 0, a decoder 304 feeds a line 305 with such a signal a as controls the bus driver 222 into a state in which it receives the data from the bus 105.

The decoder 304 further feeds the stack 207 with such a signal b through the line 305 as indicates that the data on an internal bus 112 are to be set. Thus, the register stack 207 is set with the first command which has been fed from the MPU. The signal b from the decoder 304 is also fed to the µ control 208. This circuit is so programmed that it is usually held to await the command input and that it accesses the leading data of the stack 207 when it receives the signal b in that held state. In order to make that access possible, moreover, any registers in the stack 207 are so constructed that they can be accessed by the µ control 208. This µ control 208 receives that leading data through a line 312 and executes such a program routine as to decode which command those leading data correspond to. After this decoding operation, the µ control 208 executes the first microinstruction routine for the first command at that time. By making use of the fact that for each command the data necessary for executing the command are determined in advance, it is checked at the start of that routine whether or not all the decoded data necessary for the command execution are stored in the stack 207. After having executed the store instruction of the first command, the MPU executes, in a predetermined order, a plurality of store instructions for sequentially storing the aforementioned data necessary for that command execution in the FD control 103 so that those data are sequentially stored in the stack 207. At this time, the increment of the stack pointer (although not shown) is conducted in response to the signal b. The μ control 208 can be informed of it from the received number of the signal b, which takes place each storage of one datum in the stack 207, that all the necessary data have been set in the stack 207.

After that, the following operations are conducted in accordance with a first microinstruction routine.

First of all, the μ control 208 feeds a start signal to the floppy disc 107 and the DPU through a line 314. At this time, the sector identification number ID and the sector number SN are read out from the stack 207 and sent through a line 310 to the DPU. This DPU is equipped with a circuit which is made operative to select only the data designated by those data ID and SN from all the data having been read out from the floppy disc 107 and to transfer the selected data to the line 202.

Next, the μ control 208 reads out the buffer number BN from the stack 207 through the line 312 and controls the switch SWB (or SWC) so that the buffer (A) (or (B)) designated thereby may be connected with the disc bus 113. The μ control 208 also feeds a line 210 with a signal CLRA (or CLRB) for clearing the counter (A) (or (B)) corresponding to that buffer (A) (or (B)). Moreover, the switch SWD (or SWE) is switched to the output line of the frequency divider 206. Still moreover, a switch SWA is switched to the line 203.

In the DPU, there is generated in synchronism with the read data 202 the read clock 203, upon which those data are serially written in the shift register 205. The frequency divider 206 feeds a line 209 with a clock which has its frequency divided into one eighth of that clock signal. As a result, each time data of 8 bits are shifted in the shift register 205 having a capacity of 8 bits, the clock 209 is generated. In response to this clock 209, the μ control 208 feeds the line 210 with a write signal WEA (WEB) for the buffer (A) (or (B)) designated by the MPU. Thus, the 8-bit data which have been read out from the floppy disc 107 are stored to the area whose address is designated by the counter (A) (or (B)). After that the counter (A) (or (B)) is counted up by one in response to the clock 209. After that, the byte data read out from the floppy disc 107 are likewise stored sequentially one by one in the buffer (A) (or (B)). At this time, the μ control 208 conducts the counting operation of the stored data number by the use of the arithmetic and logical operation unit 402 and the register 404, each time of the writing operation in the buffer (A) (or (B)), and checks whether or not the writing operation has been conducted up to the last address of the buffer (A) (or (B)). When the check result is affirmative, it is further checked whether the sector number SN designated by the MPU and stored in the stack 207 is 1 or 2. When it is found that the sector number is 1, the data reading operation is ended. When the sector number SN is 2, on the other hand, the μ control 208 clears the counter (B) and controls the switch SWC (or SWB) thereby to connect the shift register 205 with the buffer (B) (or (A)) and to set the switch SWE (or SWD) to the clock 209 and to decrement the SN by 1. After that, the data are stored absolutely similarly to the writing operation in the buffer (A) (or (B)).

When the data of one or two sectors are stored in the aforementioned manner in the buffer (A) (or (B)), the μ control 208 feeds the line 114 with an interrupt request IREQ thereby to inform that the data reading operation has been ended and to return the stack pointer (although not shown) and other circuits to their initial states.

Data Transfer Mode from Buffer to RAM

In case the data stored in the buffer (A) (or (B)) are to be transferred to the RAM, the MPU initializes the DMA control 106. Specifically, the MPU executes the store instruction to the DMA control 106 thereby to set the start address or the like in the region of the RAM, which is to be stored with the data to be transferred.

After that, the MPU executes the instruction for storing the IOPU 108 with a second command for instructing the reading operation from the buffer (A) (or (B)) so that the command is stored in the stack 207.

Moreover, the MPU initialize the IOPU 108. Specifically, the MPU executes a plurality of store instructions for instructing the number BN of the buffer to be started to read, the number WN of the bytes of the data to be read, and the buffer address to be started to read, and stores those data in the stack 207 in the same manner as the aforementioned one.

In response to the second command newly stored in the stack 207, the μ control 208 reads out a buffer address BA from the stack 207 and sends it to the internal bus 112. The μ control 208 further reads out the buffer number BN from the stack 207 and feeds a set signal SETA (or SETB) to the counter (A) (or (B)) corresponding thereto. Thus, after the counter (A) (or (B)) has been preset, the switch SWB (or SWC) is set to the internal bus 112. As a result, the data of the address indicated by the counter (A) (or (B)) are read out to the internal bus 112. Moreover, the switch SWD (SWE) is set to a line 115A. After that, the μ control 208 set a DMA transfer request DREQ on a line 115B and awaits that the transfer acknowledge signal ACK is fed from the DMA control 106 through the line 115A. In response to the rise of the signal DREQ, more specifically, the DMA control 106 feeds out a bus request signal to the MPU through the line 100 (as shown in Fig. 1) and feeds the bus 104 with the transfer start address, which has already been given from the MPU, when the bus acknowledge signal is transferred from the MPU through the line 100, thereby to set the signal R/W on the bus 114 at the value 0. In response to the signal ACK and the signal R/W having the value 0, the decoder 304 feeds the bus driver 222 with a signal c for bringing that driver 222 into a send state and the $\mu$ control 208 with a signal d for indicating that state.

On the other hand, data indicated in the address of the counter (A) (or (B)) before increment have already been read out from the buffer (A) (or (B)) to the internal bus 112 and are transferred to the bus 105 in response to the fact that the bus driver 222 is brought into the send state. In response to the value 0 of the signal R/W on the bus 114 and the address on the bus 104, the RAM stores the data on the bus 105. On the other hand, the ACK signal on the line 115A counts up the counter (A) (or (B)) through the switch SWD (or SWE) so that the subsequent data are read out to the internal bus 112. Moreover, the $\mu$ control 208 is so programmed that it counts the byte number of the data having been transferred to the bus 104 in response to the signal c from the decoder 304 and that it detects whether or not the counted value becomes coincident with the transfer byte number existing in the stack 207. If this detection result is negative, the $\mu$ control 208 holds the DMA transfer requirement DREQ on the line 115B as it is. After having sent the transfer acknowledge signal ACK to the IOPU, the DMA control 106 checks whether the signal DREQ is 1 or not, and feeds again the signal ACK to the line 115A at the timing of ending the storage of the data in the RAM when the check result is affirmative. The signal R/W is left at the value 0. Moreover, the RAM address to be fed to the bus 104 is made a value which is larger by one than the preceding address.

After that, the next data are likewise written in the RAM from the buffer (A) (or (B)). After this time, the data of the byte number designated in advance by the MPU are similarly transferred from the buffer to the RAM.

Midway of the transfer operation being discussed, incidentally, the $\mu$ control 208 checks whether or not the last address of the buffer (A) (or (B)) has already been transferred each time the signal c is fed from the decoder 304. For this operation, the $\mu$ control 208 is so programmed that it reads out the buffer address existing in the stack 207 and holds its incremented value therein each time it receives the signal c. When the check result is affirmative, the $\mu$ control 208 clears the counter (B) (or (A)) thereby to switch the switch SWC (SWB) to the internal bus 112, the switch SWB (or SWC) to the internal bus 113, the switch SWE (or SWD) to the line 115A, and the switch SWD (or SWE) to the line 209. Thus, the subsequent operations to be conducted are to read out the data from the buffer (B) (or (A)) and to transfer them to the RAM.

When the the byte number of the transferred data reaches a value designated by the MPU, as has been described hereinbefore, the $\mu$ control

208 sets the signal DREQ on the line 115B to the value 0 and feeds the interrupt signal IREQ to the line 114. In response to the fact that the signal DREQ takes the value 0, the DMA control 106 stops the send of the signal ACK for requiring the next transfer. Thus, the MPU can be informed of the end of the data transfer.

By the operations thus far described, the MPU can transfer the data having an arbitrary length starting from an arbitrary address of the buffer to the RAM.

### Rewrite of Data in Buffer

When the data in the buffer (A) (or (B)) is to be rewritten, the MPU executes a plurality of store instructions to write a third command for indicating the rewriting operation, the buffer number BN to be rewritten, the leading buffer address BA of the data to be rewritten, and the byte number WN of the data to be rewritten in the stack 207 sequentially in the similar procedures to the aforementioned ones. In response to the fact that the third command has been set in the stack 207, the $\mu$ control 208 reads out the buffer address BA into the internal bus 112 from the stack 207 and sends the signal SETA (or SETB) for instructing the setting of that address to the counter (A) (or (B)) corresponding to the buffer number BN in the stack 207. Moreover, the switch SWD (or SWE) corresponding to that counter (A) (or (B)) is set to a line 316. Moreover, the switch SWB (or SWC) corresponding to the buffer number BN is set to the internal bus. After that, the MPU executes the store instructions which have both an address for the FD control 103 and data to be written in the buffer. As a result, the address of the FD control 103 and the data to be written are fed to the lines 104 and 105, and the signal R/W on the line 114 takes the value 0. As a result, those data are transferred through the bus driver 222 to the internal bus 112. In response to the output b of the decoder 304, on the other hand, the $\mu$ control 208 feeds the write signal WEA (or WEB) to the buffer (A) (or (B)) corresponding to the buffer number BN existing in the stack 207. Thus, the write data from the MPU are stored in the buffer (A) (or (B)) designated by the MPU. The $\mu$ control 208 then feeds the line 316 with a signal up for counting up the counter (A) (or (B)). If the MPU sequentially executes the store instructions for the different data, new data can be sequentially written in the buffer (A) or (B) from the area specified by the buffer address BA which has been set in advance in the stack 207. Each time the write signal WEA (or WEB) is received, the $\mu$ control 208 checks whether or not the written data number is coincident with the byte number BN set in the stack 207. If this check result is affirmative, the FD control 103 is returned to its command awaiting state.

### Transfer Mode from Disc to RAM

By the use of a fourth command, according to the present embodiment, the data read out from the disc can be transferred to the RAM as soon as they are stored in the buffer. Moreover, this transfer can be continuously conducted for the data over the plural sectors by repeatedly using the buffers (A) and (B). The operations at this time can be realized by conducting the read mode from the disc to the buffer and the transfer mode from the buffer to the RAM in parallel with each other, as has been described hereinbefore. Such transfer mode can be realized by the use of only one command.

Write Mode from Buffer to Disc

In this mode, the clock 204 in the writing operation is generated outside the DPU and is selected in place of the clock 203 by the switch SWA. The data may be written in the shift registers 205 by means of the μ control 208 in the state in which the switch SWB (or SWC) connects the buffer (A) (or (B)) with the disc bus 113.

**Claims**

1. A microcomputer system comprising:
a microcomputer (101);
a random access memory (102);
a peripheral storage (107);
a perpheral storage control (103) connecting the preceding elements (101, 102, 107) and including
a buffer (110A, 110B) for feeding data to and/or reading out data from said peripheral storage (107), a counter (111A, 111B) for instructing the address in said buffer (110A, 110B) and a control (108) for controlling data transfer in said peripheral storage control (103) and for presetting and/or clearing said counter (111A, 111B); said data transfer control (108) including:
means for transferring the data from said peripheral storage (107) to said buffer (110A, 110B) in response to the command of the microcomputer (101), and means for transferring the data to be written from said microcomputer (101) to said buffer and means for transferring the data from said buffer to the peripheral storage;
characterized in that said data transfer control (108) comprises
a register stack (207) for storing a command received from the microcomputer (101),
a microinstruction control (208) for controlling the counter (111A, 111B) and the buffer (110A, 110B), which includes a means for clearing the counter and for transferring the data from said peripheral storage (107) to said buffer in response to the command transferred to said register stack (207) from said microcomputer (101),
means for presetting in the counter (111A, 111B) a buffer address of the data to be rewritten in response to the command and said buffer address transferred to the control (108) by the microcomputer (101), and
means for feeding a write signal to the buffer (110A, 110B) so as to store the data to be written which are transferred from said microcomputer (101) to said buffer (110A, 110B) in response to the store instruction of said microcomputer (101).

2. A microcomputer system according to claim 1, characterized in that said data transfer control (108) further comprises
means for incrementing or decrementing said counter (111A, 111B) in the operation of transferring the data between said peripheral storage (107) and said buffer (110A, 110B) and in the operation of transferring the data between said microcomputer (101) and said buffer (110A, 110B).

3. A microcomputer system according to claim 1 or 2, characterized in that it further comprises a direct memory access control (106) which transfers the data between said random access memory (102) and said buffer (110A, 110B) on behalf of said microcomputer (101).

**Patentansprüche**

1. Microcomputersystem mit
einem Microcomputer (101);
einem Speicher mit wahlfreiem Zugriff (RAM) (102);
einem peripheren Speicher (107);
einer Steuerung (103) für den peripheren Speicher, die die voranstehenden Elemente (101, 102, 107) verbindet und die aufweist:
einen Puffer (110A, 110B) um Daten dem peripheren Speicher (107) zuzuführen oder aus ihm auszulesen,
einen Zähler (111A, 111B) zum Anzeigen der Adresse in dem Puffer (110A, 110B), und
eine Steuerung (108) zum Steuern der Datenübertragung in der Steuerung (103) für den peripheren Speicher und zum Voreinstellen und/oder zum Löschen des Zählers (111A, 111B), wobei die Datenübertragungssteuerung (108) aufweist:
eine Einrichtung zum Übertragen der Daten von dem peripheren Speicher (107) zu dem Puffer (110A, 110B) in Antwort auf den Befehl des Microcomputers (101), und eine Einrichtung, um die zu schreibenden Daten von dem Microcomputer (101) zu dem Puffer zu übertragen, und eine Einrichtung zum Übertragen der Daten von dem Puffer zum peripheren Speicher;
dadurch gekennzeichnet, daß die Datenübertragungssteuerung (108) aufweist:
ein Stapelregister (207) zum Speichern eines von dem Microcomputer (101) empfangenen Befehls,
eine Microbefehlssteuerung (208) zum Steuern des Zählers (111A, 111B) und des Puffers (110A, 110B), die eine Einrichtung enthält zum Löschen des Zählers und zum Übertragen von Daten von dem peripheren Speicher (107) zu dem Puffer in Antwort auf den von dem Microcomputer (101) zu dem Stapelregister (207) übertragenen Befehl,
eine Einrichtung, um in dem Zähler (111A, 111B) eine Pufferadresse der in Antwort auf den Befehl einzuschreibenden Daten und eine durch den Microcomputer (101) zu der Steuerung (108) übertragene Pufferadresse voreinzustellen, und
eine Einrichtung zum Zuführen eines Schreibsignals zu dem Puffer (110A, 110B), so daß die einzuschreibenden Daten gespeichert werden, welche von dem Microcomputer (101) zu dem Puffer (110A, 110B) in Antwort auf den Speicherbefehl des Microcomputers (101) übertragen werden.

2. Microcomputersystem nach Anspruch 1, da dadurch gekennzeichnet, daß die Datenübertragungssteuerung (108) weiter

eine Einrichtung aufweist, um den Zähler (111A, 111B) beim Vorgang der Datenübertragung zwischen dem peripheren Speicher (107) und dem Puffer (110A, 110B) und beim Vorgang der Datenübertragung zwischen dem Microcomputer (111) und dem Puffer (110A, 110B) zu inkrementieren oder zu dekrementieren.

3. Microcomputersystem nach Anspruch 1 oder 2, dadurch gekennzeichnet, daß eine Steuerung (106) für einen Direktspeicherzugriff vorgesehen ist, die Daten zwischen dem Speicher (102) mit wahlfreiem Zugriff und dem Puffer (110A, 110B) für dem Microcomputer (101) überträgt.

**Revendications**

1. Système à microordinateur comprenant:
un microordinateur (101);
une mémoire à accés direct (102);
une mémoire périphérique (107);
und dispositif (103) de commande de la mémoire périphérique raccordant les éléments précédents (101, 102, 107) et comprenant:

un tampon (110A, 110B) servant à envoyer des données à ladite mémoire périphérique (107) et/ou à lire des données à partir de cette mémoire,

un compteur (111A, 111B) servant à déterminer l'adresse dans ledit tampon (110A, 110B), et

un dispositif de commande (108) servant à commander un transfert de données dans ledit dispositif (103) de commande de la mémoire périphérique et à prérégler et/ou effacer ledit compteur (111A, 111B); ledit dispositif (108) de commande de transfert des données incluant:

des moyens pour transférer les données depuis ladite mémoire périphérique (107) dans ledit tampon (110A, 110B) en réponse à la commande du microordinateur (101), et des moyens pour transférer les données devant être enregistrées, depuis ledit microordinateur (101) dans ledit tampon et des moyens pour transférer les données depuis ledit tampon dans la mémoire périphérique; caractérisé en ce que le dispositif (108) de commande de transfert des données comporte

une pile formant registre (207) servant à mémoriser une commande reçue de la part du microordinateur (101),

un dispositif (208) de commande de microinstructions servant à commander le compteur (111A, 111B) et le tampon (110A, 110B) et qui inclut un dispositif pour effacer le compteur et pour transférer les données depuis ladite mémoire périphérique (107) dans ledit tampon en réponse à la commande transférée à ladite pile formant registre (207) à partir dudit microordinateur (101),

des moyens pour prérégler, dans le compteur (111A, 111B), und adresse de tampon des données devant être rèenregistrées en réponse à la commande et ladite adresse de tampon transférée au dispositif de commande (108) par le microordinateur (101), et

des moyens pour envoyer un signal d'enregistrement au tampon (110A, 110B) de manière a mémoriser les données devant être enregistrées et qui sont transférées depuis ledit microordinateur (101) audit tampon (110A, 110B), en réponse à l'instruction de mémorisation dudit microordinateur (101).

2. Système à microordinateur selon la revendication 1, caractérisé en ce que ledit dispositif (108) de commande de transfert des données comporte en outre

des moyens pour incrémenter ou décrémenter ledit compteur (111A, 111B) lors de l'opération de transfert des données entre ladite mémoire périphérique (107) et ledit tampon (110A, 110B) et lors de l'opération de transfert des données entre ledit microordinateur (101) et ledit tampon (110A, 110B).

3. Système à microordinateur selon la revendication 1 ou 2, caractérisé en ce qu'il comporte en outre un dispositif (106) de commande de la mémoire à accés direct, qui transfére les données entre ladite mémoire à accès direct (102) et ledit tampon (110A, 110B) pour le compte dudit microordinateur (101).

## FIG. 1

FIG. 2